# EUROPEAN PATENT APPLICATION

(11) **EP 4 773 422 A1**
(43) Date of publication of application: **08.07.2026**
(21) Application number: 25867170.0
(22) Date of filing: 29.05.2025
(51) Int. Cl.: H01M 50/559, H01M 50/581, H01M 50/566, H01M 50/186, H01M 50/167, H01M 50/249

(54) **SUBASSEMBLY, AND BATTERY, BATTERY PACK, AND VEHICLE INCLUDING SAME**

(30) Priority: 11.10.2024 KR 20240138228
(71) Applicant: LG Energy Solution, Ltd., Seoul 07335 (KR)
(72) Inventor: KIM, Seong-Nyeong, Daejeon 34122 (KR); OH, Jeong-Seop, Daejeon 34122 (KR); LIM, Gu-Min, Daejeon 34122 (KR); JIN, Eui-Gyeom, Daejeon 34122 (KR); HEO, Hyeon-Jun, Daejeon 34122 (KR); HWANGBO, Kwang-Su, Daejeon 34122 (KR)
(74) Representative: Goddar, Heinz J.
(86) International application number: PCT/KR2025/007367
(87) International publication number: WO 2026/079574

(57) **Abstract**

A battery includes a battery housing, an electrode assembly housed in the battery housing, a terminal gasket positioned in a through-hole extending through an end wall of the battery housing, an electrode terminal positioned within the terminal gasket so as to be spaced from the end wall, and a deformable element positioned between the end wall and the electrode terminal to bias the electrode terminal towards the end wall.

The battery housing has a first electrical polarity, and the electrode terminal has an opposite second electrical polarity. The biasing element may be a spring washer in a compressed state. The biasing element has a higher melting point than the terminal gasket.

Accordingly, upon melting of the terminal gasket during thermal runaway, the deformable element returns towards an undeformed state to cause the electrode terminal to electrically contact the battery housing to induce a short circuit.

## Description

### TECHNICAL FIELD

The present disclosure relates to a subassembly of a battery, and a battery, a battery pack and a vehicle including the same.

### CROSS-REFERENCE TO RELATED APPLICATIONS

The present application claims priority from Korean Patent Application No. 10-2024-0138228 filed on October 11, 2024 with the Korean Intellectual Property Office, the disclosure of which is hereby incorporated herein by reference.

### BACKGROUND ART

Secondary batteries having a wide range of applications and electrical characteristics such as high energy density are widely used in portable devices as well as electric vehicles (EVs) and hybrid electric vehicles (HEVs) running on electricity.

Secondary batteries drastically reduce the use of fossil fuels, and they themselves do not generate any by-products resulting from the use of energy, so attention is paid to secondary batteries as a new energy source with eco-friendliness and high energy efficiency.

The types of secondary batteries now widely used include lithium ion batteries, lithium polymer batteries, nickel cadmium batteries, nickel hydrogen batteries, nickel zinc batteries and so on. The operating voltage of a unit secondary battery typically ranges from approximately 2.5 V to 4.5 V. When a higher output voltage is required, batteries are generally connected in series to form a battery pack. In addition, a battery pack may be formed by connecting batteries in parallel, depending on the charge/discharge capacity required for the battery pack. Therefore, the number of batteries included in the battery pack and the electrical connection type may be variously set depending on the required output voltage and/or charge/discharge capacity.

Meanwhile, the commonly used types of secondary batteries include cylindrical, prismatic, and pouch-type batteries. A cylindrical battery is manufactured by winding positive and negative electrodes with an insulator or a separator interposed between them to form a jellyroll-type electrode assembly, and inserting the jellyroll-type electrode assembly into a battery housing together with an electrolyte. In addition, a strip-shaped electrode tab may be connected to an uncoated portion of each of the positive and negative electrodes, and the electrode tab electrically connects the electrode assembly to an exposed electrode terminal. For reference, the positive electrode terminal is generally a cap of a sealing body that seals the opening of the battery housing, and the negative electrode terminal is generally the battery housing itself.

However, according to the conventional cylindrical batteries having the above-described structure, electric current concentration occurs on the strip-shaped electrode tabs connected to the positive electrode uncoated portion and/or the negative electrode uncoated portion, resulting in high resistance, excess heat generation, and low current collection efficiency.

Small cylindrical batteries having the foam factor of 1865 (diameter: 16 mm, height: 65 mm) or 2170 (diameter: 21 mm, height: 70 mm) are generally not considered to raise resistance and heat generation issues. However, when the form factor is increased so as to apply the cylindrical batteries to electric vehicles, a large amount of heat may be generated at or near the electrode tabs during fast charging, potentially causing fire in the cylindrical batteries.

To solve this problem, a cylindrical battery (a so-called tab-less cylindrical battery) has been proposed, in which the positive electrode uncoated portion and the negative electrode uncoated portion are disposed at the upper and lower ends of the jellyroll-type electrode assembly, respectively, and a current collector is welded to each of the uncoated portions to improve the current collection efficiency.

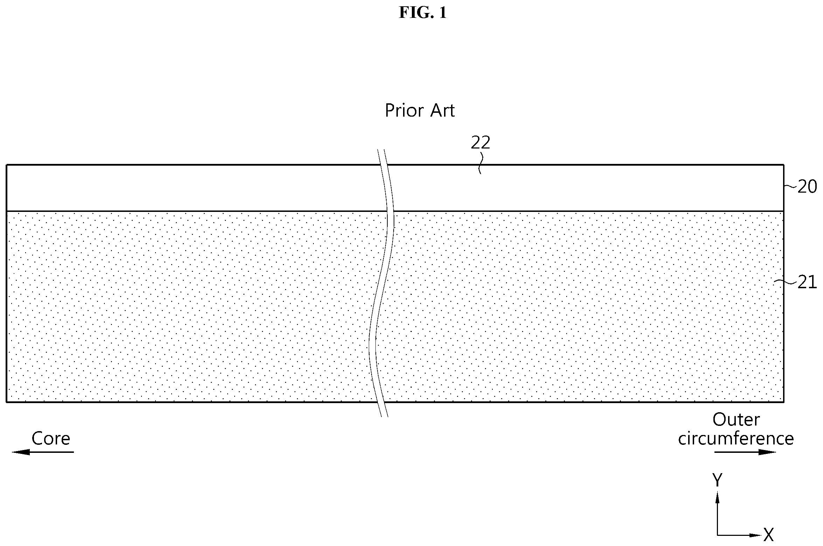

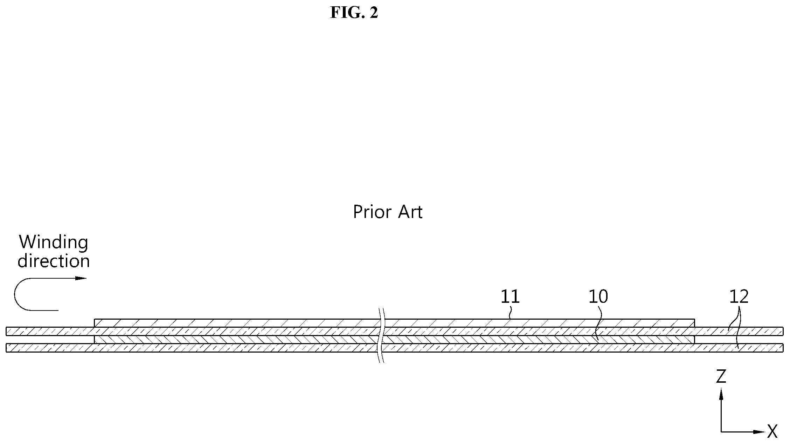

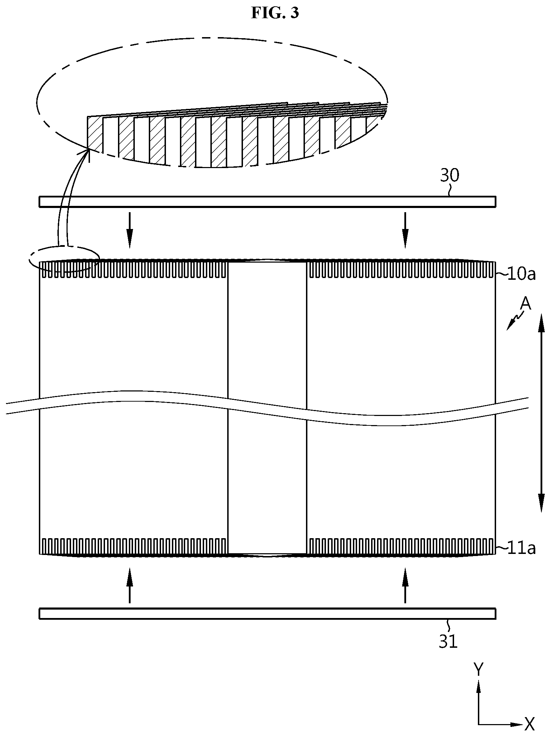

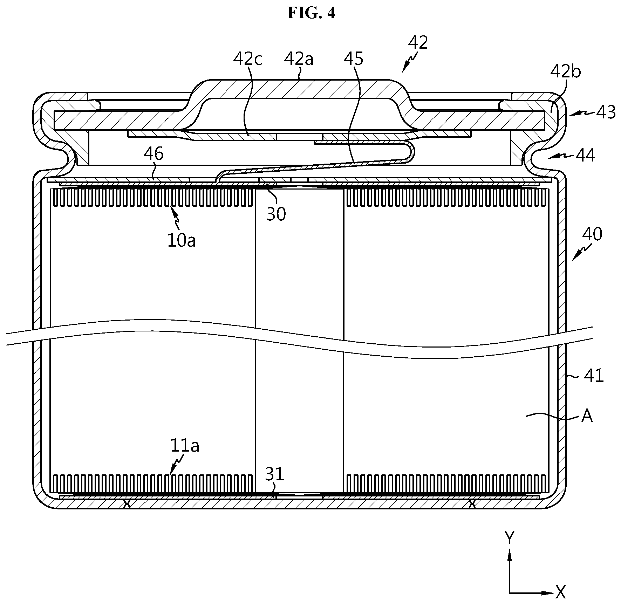

FIGS. 1 to 3 illustrate a process of manufacturing the tab-less cylindrical battery. Specifically, FIG. 1 illustrates the structure of an electrode unwound in a planar configuration, FIG. 2 illustrates the direction in which a stack of electrodes and separators are wound to form an electrode assembly, and FIG. 3 illustrates the arrangement of the wound electrode assembly so as to be welded to current collectors. FIG. 4 is a cross-sectional view of the completed tab-less cylindrical battery taken along the longitudinal direction (Y).

Referring to FIGS. 1 to 4, the positive electrode 10 and the negative electrode 11 have a structure in which an active material 21 is coated on the sheet-shaped current collector 20, such that an uncoated portion 22 is present along one long side of the respective electrode before it is wound along the winding direction (X).

The electrode assembly A is manufactured by stacking the positive electrode 10 and the negative electrode 11 in a sequential order together with two sheets of separators 12 and then winding the electrode assembly about an axis extending in the Y direction such that the wound portion of the electrode assembly advances along the X direction shown in FIG. 2. In this instance, the uncoated portions of the positive electrode 10 and the negative electrode 11 are disposed in opposite directions from one another along the Y direction.

After the winding process, the uncoated portion 10a of the positive electrode 10 and the uncoated portion 11a of the negative electrode 11 are bent toward the central core about which the electrode assembly is wound, as shown in FIG. 3. Subsequently, the current collectors 30, 31 are joined to the respective bent uncoated portions 10a, 11a by welding.

The positive electrode uncoated portion 10a and the negative electrode uncoated portion 11a take the place of electrode tabs, as the current collectors 30, 31 are each connected to a respective external electrode terminal, thus forming a current path having a large cross-sectional area within a cross section defined perpendicular to the winding axis direction (or the Y-axis direction) of the electrode assembly A, which reduces the resistance of the battery. It is because the resistance is inversely proportional to the cross-sectional area of the passage through which the current flows.

However, as the form factor of the cylindrical battery increases and the magnitude of charging current during fast charging increases, the heat generation problem may occur again.

The conventional tab-less cylindrical battery 40 includes a battery housing 41 and a sealing body 42 as shown in FIG. 4. The battery housing 41 is also referred to as a battery can. The sealing body 42 includes a cap 42a, a sealing gasket 42b, and a connection plate 42c. The sealing gasket 42b is disposed around the edge of the cap 42a and is fixed by a crimping portion 43. In addition, the electrode assembly A is fixed within the battery housing 41 by a beading portion 44 to prevent the electrode assembly A from moving up and down.

Typically, the positive electrode terminal is the cap 42a of the sealing body 42 and the negative electrode terminal is the battery housing 41. Accordingly, the current collector 30 coupled to the uncoated portion 10a of the positive electrode 10 is electrically connected to the connection plate 42c attached to the cap 42a through a strip-shaped lead 45. In addition, the current collector 31 coupled to the uncoated portion 11a of the negative electrode 11 is electrically connected to the bottom of the battery housing 41. An insulator 46 covers the current collector 30 to prevent the contact between the uncoated portion 10a of the positive electrode 10 and the battery housing 41 having different polarities, which may cause a short circuit.

When the current collector 30 is connected to the connection plate 42c, the strip-shaped lead 45 is used. The lead 45 is attached to the current collector 30 or is integrally formed with the current collector 30. However, since the lead 45 has a thin strip shape, due to a small cross-sectional area, a large amount of heat is generated when fast charging current flows. In addition, when the large amount of heat generated from the lead 45 is transferred to the electrode assembly A, the separator 12 may shrink, causing an internal short circuit that is the main cause of thermal runaway.

The lead 45 occupies a considerable installation space inside the battery housing 41. Therefore, the cylindrical battery 40 including the lead 45 has low space efficiency that is a limitation in increasing energy density.

In addition, the upper part of the crimping portion 43 has a negative polarity but a small area. The crimping portion 43 appears large in the drawings, but actually, the upper part of the crimping portion 43 has a very small area compared to the sealing body 42. Therefore, to stably connect to a busbar component, the positive electrode may be connected to the crimped sealing body 42 at the open end region of the battery housing 41 and the negative electrode may be connected to the bottom of the battery housing 41.

As described above, to connect the conventional tab-less cylindrical batteries 40 in series and/or in parallel, the busbar component may be connected to the cap 42a of the sealing body 42 and the bottom of the battery housing 41, resulting in low space efficiency. A battery pack mounted on an electric vehicle includes a few hundred cylindrical batteries 40. Therefore, inefficient electrical wiring leads to an inconvenient assembly process of the electric vehicle, as well as maintenance and repair of the battery pack.

Meanwhile, lithium secondary batteries may be electrically connected and received in a module case to form a battery module. In this instance, each lithium secondary battery included in the battery module may be referred to as a battery cell. In addition, a plurality of battery modules may be connected to form a battery pack. However, when the plurality of battery modules is included in the battery pack, and each battery module includes the plurality of battery cells, they may be vulnerable to thermal chain reaction between the battery modules or between the battery cells. For example, when thermal runaway occurs in any battery module, the thermal runaway may propagate to other battery modules or other battery cells. Therefore, better suppression of the propagation of thermal runaway between battery modules or between battery cells would be desirable.

### DISCLOSURE

### Technical Problem

The present disclosure is designed under the above-described background and therefore the present disclosure provides an improved electrode terminal structure of a cylindrical battery, which desirably increases the space efficiency inside a battery housing, thereby reducing the internal resistance of the cylindrical battery and increasing the energy density.

The present disclosure desirably increases the cross-sectional area of a current path within the battery, thereby reducing or preventing internal heat generation during fast charging.

The present disclosure may further help to prevent the spread of fire to adjacent batteries by inducing contact between the battery housing and the electrode terminal in the event of thermal runaway.

The present disclosure further allows an electrical wiring operation for connecting cylindrical batteries in series and/or in parallel to be performed on one side of the cylindrical battery.

The present disclosure further provides a battery pack manufactured using the cylindrical battery having the improved structure, as well as a vehicle including the same.

The technical problems solved by the present disclosure are not limited to the above-described problems, and these and other problems may be clearly understood by those skilled in the art from the following description.

### Technical Solution

According to an aspect of the present disclosure, there is provided a subassembly of a battery.

According to an aspect of the present disclosure, there is provided the subassembly of the battery, the subassembly including a battery housing defining an interior space configured to receive at least a portion of an electrode assembly therein, the battery housing extending along an axial direction, the battery housing having an open end region at a first side along the axial direction and a closed end region at an opposing second side along the axial direction, the closed end region defined by an end wall having a through-hole extending therethrough; a terminal gasket positioned within the through-hole; an electrode terminal positioned within the terminal gasket so as to be spaced from the end wall of the battery housing by the terminal gasket, the electrode terminal being exposed to an exterior of the battery housing; and a deformable element positioned between the end wall and the electrode terminal so as to bias at least a portion of the electrode terminal towards the end wall.

According to another aspect of the present disclosure, the electrode terminal may include a body portion positioned within the through-hole; an outer flange portion extending radially outwardly from an exterior end of the body portion; and an inner flange portion extending radially outwardly from an interior end of the body portion.

According to another aspect of the present disclosure, the body portion, the outer flange portion, and the inner flange portion may be integrally formed as a monolithic structure of the electrode terminal.

According to another aspect of the present disclosure, an inwardly oriented side of the inner flange portion may define a flat welding surface.

According to another aspect of the present disclosure, the terminal gasket may include an outer gasket positioned between the outer flange portion and an outer surface of the end wall of the battery housing; an inner gasket positioned between the inner flange portion and an inner surface of the end wall of the battery housing; and an intermediate gasket extending between the body portion and the end wall of the battery housing so as to connect the outer gasket to the inner gasket.

According to another aspect of the present disclosure, the deformable element may be positioned between the outer flange portion and the outer gasket.

According to another aspect of the present disclosure, the deformable element may be positioned between the outer surface of the end wall of the battery housing and the outer gasket.

According to another aspect of the present disclosure, the deformable element may include an elastic biasing element or a temperature-responsive deformable element.

According to another aspect of the present disclosure, the elastic biasing element may include a spring washer.

According to another aspect of the present disclosure, the battery housing may be cylindrical in shape.

According to another aspect of the present disclosure, the deformable element may include an elastic biasing element, and the elastic biasing element may be in a compressed configuration such that it is biased to expand towards an undeformed configuration by a predetermined displacement amount along the axial direction.

According to another aspect of the present disclosure, the elastic biasing element may be in a configuration such that it is biased to expand towards an undeformed configuration by a predetermined displacement amount along the axial direction.

According to another aspect of the present disclosure, the displacement amount may be greater than or equal to a thickness of the terminal gasket.

According to another aspect of the present disclosure, the displacement amount may be greater than or equal to a total thickness of all portions of the terminal gasket along the axial direction.

According to another aspect of the present disclosure, the deformable element may be electrically conductive.

According to another aspect of the present disclosure, a melting point of the deformable element may be higher than a melting point of the terminal gasket.

According to another aspect of the present disclosure, there is provided a battery including the subassembly according to the above-described aspect; and an electrode assembly received within the interior space of the battery housing, the electrode assembly including a first electrode and a second electrode and a separator interposed between the first electrode and the second electrode, the first electrode, the second electrode and the separator being wound together, wherein the first electrode is electrically connected to the battery housing and the second electrode is electrically connected to the electrode terminal.

According to another aspect of the present disclosure, the battery may further include a sealing body positioned over and sealing the open end region of the battery housing.

According to another aspect of the present disclosure, the battery housing may further include a crimping portion extending radially inwardly so as to be disposed around an edge of the sealing body.

According to another aspect of the present disclosure, there is provided a battery pack including the battery according to the above-described aspect.

According to another aspect of the present disclosure, there is provided a vehicle including the battery pack according to the above-described aspect.

### Advantageous Effects

According to an aspect of the present disclosure, it may be possible to improve the electrode terminal structure of the battery to increase space efficiency inside the battery housing, thereby reducing the internal resistance of the battery and increasing the energy density.

According to another aspect of the present disclosure, it may be possible to prevent the spread of fire to adjacent batteries by inducing contact between the battery housing and the electrode terminal in the event of thermal runaway. Such contact may be induced by use of a deformable element in the electrode terminal structure.

According to another aspect of the present disclosure, it may be possible to reduce or prevent internal heat generation during fast charging by improving the electrode terminal structure of the battery to increase the cross-sectional area of the current path.

According to another aspect of the present disclosure, it may be possible to perform an electrical wiring operation for connecting batteries in series and/or in parallel on one side of the battery.

According to another aspect of the present disclosure, it may be possible to provide a battery pack manufactured using the battery having the improved structure and a vehicle including the same.

The above examples of advantageous effects are not limiting, as the present disclosure may give rise to other advantages not specifically identified herein.

### BRIEF DESCRIPTION OF THE DRAWINGS

The accompanying drawings illustrate exemplary aspects of the present disclosure, and, together with the foregoing disclosure, serve to provide a better understanding of the technical aspects of the present disclosure. The present disclosure is not to be construed as being limited to the exemplary aspects illustrated in the drawings.

FIG. 1 is a plan view illustrating the structure of an unwound electrode as used in a conventional tab-less cylindrical battery.

FIG. 2 is a side view of a stack of electrodes and separators of a conventional tab-less cylindrical battery before winding the stack into a wound electrode assembly.

FIG. 3 illustrates the arrangement of the wound electrode assembly of FIG. 2 relative to current collectors to be welded to it.

FIG. 4 is a cross-sectional elevation view of a conventional tab-less cylindrical battery taken along an axial direction (Y).

FIG. 5 is a cross-sectional elevation view of an end of a cylindrical battery showing a subassembly of a battery according to an aspect of the present disclosure.

FIG. 6a is an enlarged view of the region enclosed by the dashed circle in FIG. 5.

FIG. 6b is an enlarged cross-sectional view of a subassembly of a battery according to another aspect of the present disclosure.

FIG. 6c is a perspective view of an elastic biasing element for positioning between a terminal gasket and an electrode terminal according to an aspect of the present disclosure.

FIG. 6d is a side elevation view of the elastic biasing element of FIG. 6c in its undeformed state.

FIG. 6e is a perspective view of first and second shapes of a temperature-responsive deformable element according to another aspect of the present disclosure.

FIG. 6f is a schematic cross-sectional view showing the deformable element applying force toward the end wall direction on at least a portion of the electrode terminal.

FIG. 7a is a cross-sectional elevation view of a cylindrical battery according to an aspect of the present disclosure taken along the axial direction (Y).

FIG. 7b is a cross-sectional elevation view of a cylindrical battery according to another aspect of the present disclosure taken along the axial direction (Y).

FIG. 8 is a plan view illustrating an unwound electrode structure according to an exemplary aspect of the present disclosure.

FIG. 9 is a cross-sectional elevation view of an electrode assembly including a winding structure having an uncoated portion according to an aspect of the present disclosure, taken along the axial direction (Y).

FIG. 10a is a cross-sectional elevation view of the electrode assembly of FIG. 9, in which the uncoated portion is bent towards the winding axis, according to an aspect of the present disclosure.

FIG. 10b is a perspective view of the electrode assembly of FIG. 10a.

FIG. 11 is a partially cutaway perspective view of a battery pack including cylindrical batteries according to an aspect of the present disclosure.

FIG. 12 is a schematic view of a vehicle including a battery pack according to an aspect of the present disclosure.

### BEST MODE

Hereinafter, the exemplary aspects of the present disclosure will be described in detail with reference to the accompanying drawings. The terms or words used in this specification and the appended claims should not be construed as being limited to general or dictionary meanings, and rather, should be interpreted based on the meanings and concepts conveyed by the technical aspects of the present disclosure. This follows the principle that the inventor is allowed to define terms appropriately for the best explanation.

The aspects described herein and the illustrations in the drawings are merely exemplary aspects of the present disclosure, in order to describe the technical aspects of the present disclosure, but are not intended to be limiting. Therefore, it should be understood that a variety of equivalents and modifications could have been made within the scope of the disclosure at the time the application was filed.

In addition, to help the understanding of the present disclosure, some elements may not be to scale in the accompanying drawings, but rather illustrated with exaggerated dimensions. Further, the same reference numerals may be affixed to the same or corresponding elements in different aspects.

Although the terms first, second, and so on are used to describe various elements, these elements are not limited by these terms. The terms are only used for convenience to distinguish one element from another, and, unless specifically stated otherwise, the first element may be the second element, and vice versa.

Throughout the specification, unless specifically stated otherwise, each element may be singular or plural.

The term "on" may represent that an element is placed in contact with an outer surface (e.g., an upper or a lower surface) of another element, and intervening elements may be present.

Additionally, when an element is described as being "connected to", "coupled to" or "joined to" other element, it should be understood that the element may be directly connected or indirectly connected (via one or more intervening elements) to the other element.

Throughout the specification, "A and/or B" may refer to either A or B, or both, unless otherwise stated, and "C to D" may refer to C or more and D or less, unless otherwise stated.

For convenience of description, a direction along a longitudinal direction of a winding axis of an electrode assembly wound in a jellyroll shape as used herein is referred to as an axial direction (Y). In addition, a direction surrounding the winding axis and extending along the longitudinal lengths of the wound electrodes and separators in the electrode assembly may be referred to as a circumferential or peripheral direction or a winding direction (X). In addition, a direction toward or away from the winding axis is referred to as a radial direction, and particularly, the direction toward the winding axis is referred to as a centripetal direction, and the direction away from the winding axis is referred to as a centrifugal direction.

In this specification, the term subassembly of a battery or subassembly refers to a partial assembly of the battery and may refer to a fixing structure of an electrode terminal.

A cylindrical battery according to an aspect of the present disclosure may include an electrode terminal positioned within a through-hole in an end wall of a battery housing. The electrode terminal is positioned within a terminal gasket so as to be spaced from the end wall of the battery housing by the terminal gasket, the electrode terminal being exposed to an exterior of the battery housing.

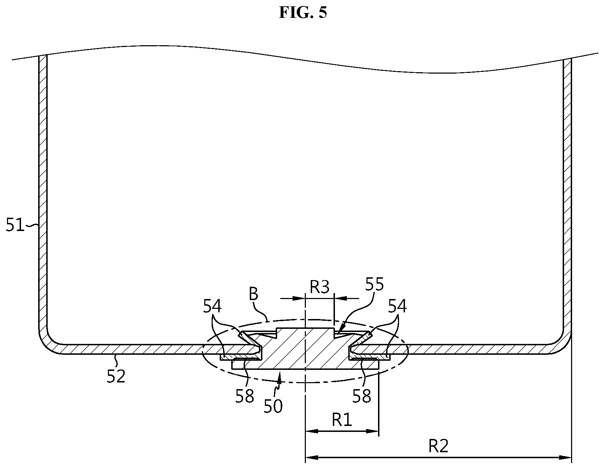

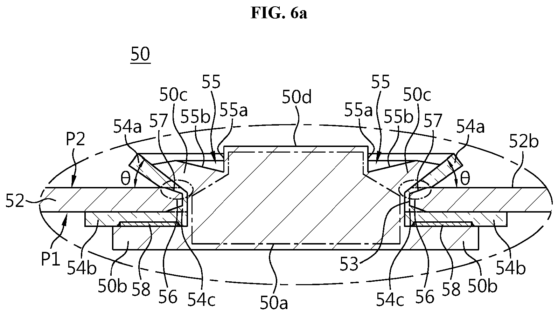

FIG. 5 is a cross-sectional view showing a subassembly of a battery, for example, a fixing structure of an electrode terminal 50 according to an aspect of the present disclosure, and FIG. 6a is an enlarged view of the region enclosed by the dashed line circle region in FIG. 5.

Referring to FIGS. 5 and 6a, the electrode terminal 50 may include a body portion 50a, an outer flange portion 50b and an inner flange portion 50c. The body portion 50a includes an upper surface, a lower surface, and an outer side surface. The outer flange portion 50b projects radially outwardly from the outer side surface of the body portion 50a and extends along an outer surface 52a of the end wall 52 of the battery housing 51. The inner flange portion 50c projects outwardly from the outer side surface of the body portion 50a such that at least part of the inner flange portion 50c faces an inner surface 52b of the end wall 52 of the battery housing 51. An upper surface of the body portion 50a is flat and may be connected to a current collector, and the upper surface may be located at a higher position (i.e., further away from the end wall 52 of the battery housing 51 along the axial direction (Y)) than the inner flange portion 50c.

The fixing structure of the electrode terminal 50 according to an aspect of the present disclosure may be applied to the cylindrical battery housing 51 structure having one open side so as to fix the electrode terminal in a position extending through a through-hole 53 in the end wall 52 of the battery housing 51, opposite the open side. Specifically, the fixing structure of the electrode terminal 50 may include a terminal gasket 54 interposed between the electrode terminal 50 and the through-hole 53.

The battery housing 51 may include a side wall connected to a radially outer portion of the end wall 52 of the battery housing 51 and extending away therefrom so as to define a cylindrical profile. It is noted that the battery housing 51 may have any other shape, however, such as a prismatic shape having a rectangular or other polygonal profile in a plane extending orthogonal to the axial direction (Y).

The battery housing 51 may be made of a conductive metal. In an example, the battery housing 51 may be made of steel, but the present disclosure is not limited thereto. The inner and outer surfaces of the battery housing 51 may be coated with a plating layer, such as a Nickel (Ni) plating layer.

The electrode terminal 50 may also be made of a conductive metal. In an example, the electrode terminal 50 may be made of aluminum, but the present disclosure is not limited thereto. The electrode terminal 50 may be made of a 10 series aluminum alloy that is easy for plastic working and has low electrical resistance. Plastic working refers to a technique of changing the shape as desired by applying a physical force to a metal, and may include riveting, caulking or fullering.

The terminal gasket 54 may be made of polymer resin having electrical insulating properties and elasticity. In an example, the terminal gasket 54 may be made of polypropylene, polybutylene terephthalate, or polyfluoroethylene, but the present disclosure is not limited thereto.

Preferably, the electrode terminal 50 is installed through the through-hole 53 so as to prevent the contact with the inner wall of the through-hole 53. The electrode terminal 50 is installed in the through-hole 53 such that the body portion 50a extends through the through-hole 53.

The outer flange portion 50b may extend along the outer surface 52a of the end wall 52 from a periphery of a first end of the body portion 50a that is exposed outwardly through the end wall 52 of the battery housing 51.

The inner flange portion 50c may extend from a periphery of a second end of the body portion 50a projecting inwardly through the end wall 52 of the battery housing 51 such that at least a portion of the inner flange portion 50c faces the inner surface 52b of the end wall 52.

The electrode terminal 50 may include a flat portion 50d on the inner side of the inner flange portion 50c. The flat portion 50d is an example of a weld portion, and the the weld portion is a portion that is to be welded to another component. The flat portion 50d may be circumferentially surrounded by the inner flange portion 50c.

The flat portion 50d may correspond to the upper surface at the second end of the body portion 50a. At least part of the flat portion 50d may include a flat surface. At least part of the flat portion 50d may be parallel to the inner surface 52b of the end wall 52 of the battery housing 51. Here, 'parallel' refers to substantially parallel when observed with the naked eye. The flat portion 50d may be a surface that has already been formed before the plastic working of the electrode terminal 50 within the through-hole 53. In other words, the flat portion 50d may be a portion of the electrode terminal 50 that is undeformed by the plastic working.

Preferably, the inner flange portion 50c may be formed by the plastic working of the material (e.g., metal) of the upper periphery of the body portion 50a. Such plastic working may be caulking, but the present disclosure is not limited thereto. In an aspect of the disclosure, the electrode terminal 50 may be a rivet terminal riveted through the through-hole 53 by the inner flange portion 50c. That is, the electrode terminal 50 may be a monolithic component that is deformed from a preform configuration by being riveted through the through-hole 53 until it achieves its final shape while positioned within the through-hole 53.

The inner flange portion 50c may extend outwardly away from the body portion 50a of the electrode terminal in a direction away from the end wall 52 of the battery housing 51. In this instance, an angle θ between the surface of the inner flange portion 50c facing the end wall 52 of the battery housing 51 and the inner surface 52b of the end wall 52 of the battery housing 51 may be, for example, in a range from 0° to 60°. The angle θ is determined by the caulking strength when the electrode terminal 50 is secured within the through-hole 53 of the battery housing 51 by caulking. In an example, as the caulking strength increases, the angle θ may decrease to 0°. When the angle θ is larger than 60°, the sealing effect of the terminal gasket 54 may be reduced.

Because the outer flange portion 50b is substantially parallel to the end wall 52 of the battery housing 51, an angle defined between the inner flange portion 50c and the outer flange portion 50b may be the same as the angle θ (e.g., in a range from 0° to 60°).

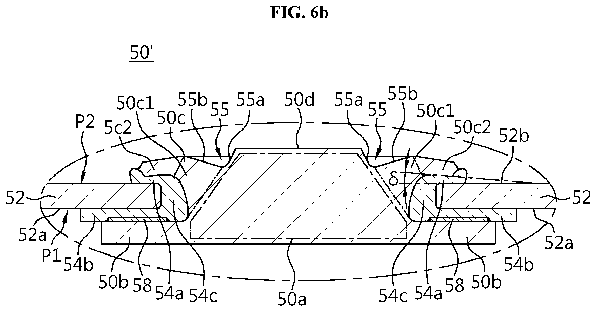

According to another aspect, a recess portion 55 may be present between the inner flange portion 50c and the flat portion 50d. The recess portion 55 may be in the form of a recessed groove that is recessed into the body portion 50a along the axial direction (Y). The groove may define a closed loop, or have an annular or toroidal shape, about the central axis of the body portion 50a extending in the axial direction (Y). The recessed groove may have a variety of cross sectional shapes, both symmetrical and asymmetrical, which are revolved about the central axis to define the annular/toroidal shape of the recess portion 55. In an example, the cross section may be approximately the letter V or U in shape. An example of an asymmetrical cross section may include a side wall 55a extending transversely to the flat portion 50d, and an inclined surface 55b connected to an end of the side wall 55a and forming at least a portion of the upper surface of the inner flange portion 50c. The outer surface of the side wall 55a may be referred to as a first surface of the recess portion 55, and the inclined surface 55b may be referred to as a second surface of the recess portion 55. As shown in FIGS. 6a and 6b, the first side and the second side may be asymmetrically oriented relative to each other. For example, the side wall 55a may be substantially perpendicular to the inner surface 52b of the end wall 52 of the battery housing 51, or substantially parallel to the central axis, as shown in FIG. 6a. The term 'perpendicular' refers to substantially perpendicular when observed with the naked eye. In another example, the side wall 55a may be inclined relative to the flat portion 50d, as shown in FIG. 6b. The recess portion 55 may be formed by the shape of a caulking jig when the electrode terminal 50 is secured within the through-hole 53 of the battery housing 51 by caulking.

According to an aspect, the thickness of the inner flange portion 50c may decrease as extends further away from the body portion 50a of the electrode terminal 50.

According to another aspect, the terminal gasket 54 may include an outer gasket 54b positioned between the outer flange portion 50b and a first plane P1 where the outer surface 52a of the end wall 52 of the battery housing 51 is located, an inner gasket 54a positioned between the inner flange portion 50c and a second plane P2 where the inner surface 52b of the end wall 52 of the battery housing 51 is located, and an intermediate gasket 54c positioned between the body portion 50a and the through-hole 53 and connecting the outer gasket 54b to the inner gasket 54a.

The outer gasket 54b and/or the inner gasket 54a and/or the intermediate gasket 54c may have a different thicknesses at each location. For example, the minimum thickness of the terminal gasket 54 may be along the intermediate gasket 54c portion. In an aspect, an area of the intermediate gasket 54c adjacent to the first plane P1 may increase in thickness as it approaches the first plane P1.

Likewise, an area of the intermediate gasket 54c adjacent to the second plane P2 may increase in thickness as it approaches the second plane P2. In addition, a central region of the intermediate gasket 54c between the first plane P1 and the second plane P2 may have a uniform thickness.

Preferably, the end wall 52 of the battery housing 51 may have a smaller thickness in a region proximate a radially inner edge 56 of the through-hole 53. Furthermore, the area of the intermediate gasket 54c between the inner edge 56 of the through-hole 53 and the inner flange portion 50c may have a minimum thickness point. In addition, the inner edge 56 of the through-hole 53 may include a surface 57 facing towards the inner flange portion 50c.

Meanwhile, an upper end and a lower end of the inner wall of the through-hole 53 perpendicular to the end wall 52 of the battery housing 51 may be chamfered (corner cut) to form a surface that is tapered toward the electrode terminal 50. However, the upper end and/or the lower end of the inner wall of the through-hole 53 may alternatively be deformed into a smooth curved surface having a curvature. In such case, it may be possible to further mitigate stress applied to the gasket 54 near the upper end and/or the lower end of the inner wall of the through-hole 53.

Preferably, the inner gasket 54a may form an angle θ in a range from 0° to 60° with respect to the inner surface 52b of the end wall 52 of the battery housing 51, and may extend longer than the inner flange portion 50c.

In another aspect, the diameter of the flat portion 50d of the electrode terminal 50 may be determined based on the welding strength between the current collector and the flat portion 50d. The tensile strength of the welded part between the flat portion 50d and the current collector may be at least 2 kgf or more, or 5 kgf or more, or 6 kgf or more, or 7 kgf or more, or 8 kgf or more, or 9 kgf or more, or 10 kgf or more. It is desirable to increase the tensile strength of the welded part as much as possible within the optimal workable range by the selected welding method.

In another aspect, as illustrated in FIG. 5, a radius R1 from the center of the body portion 50a to the edge of the outer flange portion 50b may be in a range from 10% to 70% of a radius R2 of the end wall 52 of the battery housing 51.

When R1 decreases, a welding space for welding a component (e.g., busbar) used for electrical connection of the electrode terminal 50 may be inadequate. In addition, when R1 increases, the welding space for welding the component for electrical connection to the outer surface 52a of the end wall 52 of the battery housing 51 outside of the electrode terminal 50 will be smaller.

Thus, when a ratio R1/R2 is adjusted to be in a range from 10% to 70%, it may be possible to ensure the adequate welding space for both the electrode terminal 50 and the outer surface 52a of the end wall 52 of the battery housing 51.

Additionally, a radius R3 from the center of the body portion 50a of the electrode terminal 50 to the edge of the flat portion 50d may range from 4% to 30% of the radius R2 of the end wall 52 of the battery housing 51.

When R3 decreases, the welding space for welding the current collector to the flat portion 50d of the electrode terminal 50 may be inadequate, and the welding area of the electrode terminal 50 decreases, resulting in higher contact resistance. In addition, R3 may be smaller than R1, and when R3 increases, the thickness of the inner flange portion 50c decreases, resulting in a lower compression force of the inner flange portion 50c against the terminal gasket 54, and thus poorer sealability of the terminal gasket 54.

However, when a ratio R3/R2 is adjusted to be in a range from 4% to 30%, it may be possible to ensure an adequate welding area between the flat portion 50d of the electrode terminal 50 and the current collector, thereby reducing the contact resistance of the welding area, while also maintaining adequate sealability of the terminal gasket 54.

According to an aspect of the present disclosure, the fixing structure of the electrode terminal 50 may be formed using a caulking jig that moves up and down. First, a preform (not shown) of the electrode terminal 50 may be inserted into the end wall 52 in the same manner as a rivet. Here, the preform refers to the electrode terminal before performing the caulking process. Initially, the terminal gasket 54 may be positioned within the through hole 53 of the end wall 52 of the battery housing 51.

Subsequently, the caulking jig is inserted into the interior space of the battery housing 51. The caulking jig has a groove and a protrusion that conforms to the final shape of the electrode terminal 50 so as to form the electrode terminal 50 by pressure forming of the preform. That is, a surface of the caulking jig that faces the preform may include a groove that receives the flat portion 50d of the electrode terminal, and an annular protrusion surrounding the groove may be shaped to help form the inner flange portion 50c and/or the recess portion 55 via plastic deformation during the process of pressing the preform.

Subsequently, the caulking jig is moved down to press the upper part of the preform so as to deform the preform to form the electrode terminal 50 riveted to the through-hole 53 of the battery housing 51. The press-in depth of the caulking jig may be regulated by the flat portion 50d, and the flat portion 50d is pre-formed in the body portion 50a. The caulking jig may have a groove into which the flat portion 50d is inserted, and during pressure forming of the preform, the pressure forming is stopped when the flat portion 50d contacts the bottom of the groove. As a result, the inner flange portion 50c and the recess portion 55 formed through plastic deformation may have uniform shape in mass production. In addition, during the pressure forming, the flat portion 50d may not be deformed or may only be slightly deformed, and accordingly, the flat portion 50d may also maintain a uniform shape in mass production. The subsequent process of welding the flat portion 50d and the current collector may thus be relatively easy, thereby effectively reducing manufacturing deviations.

While the preform is deformed by being pressed by the caulking jig, the outer gasket 54b between the outer flange portion 50b and the outer surface 52a of the end wall 52 of the battery housing 51 is elastically compressed such that its thickness decreases. In addition, the part of the intermediate gasket 54c between the inner edge 56 of the through-hole 53 and the preform is elastically compressed by the inner flange portion 50c such that its thickness becomes smaller. In particular, the thickness of the intermediate gasket 54c is significantly reduced in the area indicated by the dotted line circles in FIG. 6a. Accordingly, it is possible to significantly improve the sealability and hermeticity between the riveted electrode terminal 50 and the battery housing 51.

Preferably, the terminal gasket 54 is sufficiently compressed to ensure the desired sealing strength without physical damage during the riveting process of the preform through a caulking process which is a plastic deformation process.

Preferably, a compression ratio of the terminal gasket 54 may range from 30% to 90%. The minimum compression ratio corresponds to the minimum level of compression ratio to achieve sealability of the electrode terminal 50. The maximum compression ratio corresponds to the maximum possible level of compression ratio without physical damage to the terminal gasket 54.

According to an aspect of the present disclosure, when the terminal gasket 54 is made of polybutylene terephthalate, it is preferred that the compression ratio is 50% or more at the point where the terminal gasket 54 is compressed to the minimum thickness (e.g., in the regions indicated by the above-noted dotted line circles in FIG. 6a).

According to an aspect of the present disclosure, the compression ratio may be defined as a ratio of change in thickness at the maximum compression point to the thickness of the terminal gasket 54 at that point before compression. The thickness of the inner gasket 54a and the intermediate gasket 54c before compression may be uniform, and the maximum compression point may exist near the inner edge 56 of the through-hole 53. Preferably, the compression ratio may be calculated based on the uniform thickness of the inner gasket 54a and the intermediate gasket 54c.

According to another aspect of the present disclosure, when the terminal gasket 54 is made of polyfluoroethylene, it is preferred that the compression ratio is 60% or more at the point where the terminal gasket 54 is compressed to the minimum thickness. Again, the compression ratio may preferably be calculated based on the uniform thickness of the inner gasket 54a and the intermediate gasket 54c.

According to another aspect of the present disclosure, when the terminal gasket 54 is made of polypropylene, it is preferred that the compression ratio is 60% or more at the point where the terminal gasket 54 is compressed to the minimum thickness. Again, the compression ratio may be calculated based on the uniform thickness of the inner gasket 54a and the intermediate gasket 54c.

Preferably, the pressure forming of the upper part of the preform may be performed stepwise by moving the caulking jig up and down two or more times. That is, the preform may be gradually deformed over multiple up and down passes of the caulking jig, and the pressure applied to the caulking jig may be increased with each pass. By doing so, it may be possible to temporally distribute the stress applied to the preform, thereby preventing damage to the terminal gasket 54 during caulking. In particular, it may be possible to minimize damage to the gasket when the intermediate gasket 54c part between the inner edge 56 of the through-hole 53 and the preform is compressed to a significant degree by the inner flange portion 50c.

After the pressure forming of the preform using the caulking jig is completed, when the caulking jig is separated from the battery housing 51, the fixing structure of the electrode terminal 50 according to aspects of the present disclosure may be obtained as shown in FIG. 6a.

Meanwhile, the structure of the electrode terminal 50 may have various forms depending on the design of the preform and/or the caulking jig and/or the terminal gasket 54, as well as the magnitude of pressure applied to the preform during caulking.

FIG. 6b is an enlarged cross-sectional view showing the structure of the electrode terminal 50' according to another aspect of the present disclosure.

Referring to FIG. 6b, the electrode terminal 50' according to another aspect has a structure in which the inner flange portion 50c is riveted so as to extend at least partially towards the inner surface 52b of the end wall 52 of the battery housing 51. That is, the inner flange portion 50c includes a first region 50c1 extending in a direction at least partially away from the end wall 52 of the battery housing 51, and a second region 50c2 connected to the first region 50c1 and extending back towards the end wall 52 of the battery housing 51.

An angle δ between a surface of the second region 50c2 facing the end wall 52 of the battery housing 51 and the inner surface 52b of the end wall 52 may be in a range from 0° to 30°. Preferably, the angle δ may be set to be close to 0°, so as to maximally increase the sealability of the terminal gasket 54. That is, the second region 50c2 strongly compresses the inner gasket 54a, to increase the sealability of the terminal gasket 54, and this effect increases as the angle δ approaches 0°.

The terminal gasket 54 may include the outer gasket 54b positioned between the outer flange portion 50b and the first plane P1 where the outer surface 52a of the end wall 52 of the battery housing 51 is located; the inner gasket 54a positioned between the inner flange portion 50c and the second plane P2 where the inner surface 52b of the end wall 52 of the battery housing 51 is located; and the intermediate gasket 54c positioned between the body portion 50a and the through-hole 53 and connecting the outer gasket 54b to the inner gasket 54a.

Preferably, the thickness of the intermediate gasket 54c may gradually decrease in portions that are located further away from the outer gasket 54b. In addition, the inner gasket 54a may decrease to a minimum thickness near the radially outer end portion of the inner flange portion 50c and then slightly increase in thickness toward the radially innermost end of the inner gasket 54a. This compressed structure of the inner gasket 54a may further improve the sealability of the electrode terminal 50'. The compression ratio of the inner gasket 54a may be calculated at the minimum thickness point near the end portion of the inner flange portion 50c.

In an aspect of the present disclosure, a deformable element 58 may be present between the end wall 52 of the battery housing 51 and the electrode terminal 50. In an aspect of the present disclosure, the deformable element 58 may be positioned between the outer flange portion 50b and the outer gasket 54b. In another aspect of the present disclosure, the deformable element 58 may be positioned between the outer surface of the end wall 52 of the battery housing 51 and the outer gasket 54b.

In an aspect of the present disclosure, the deformable element 58 may comprise an elastic biasing element 581 or a temperature-responsive deformable element 582.

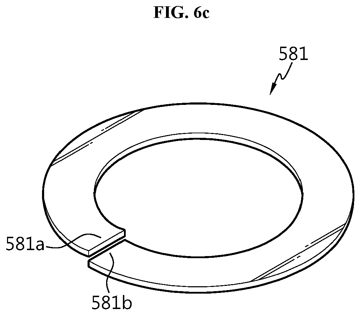

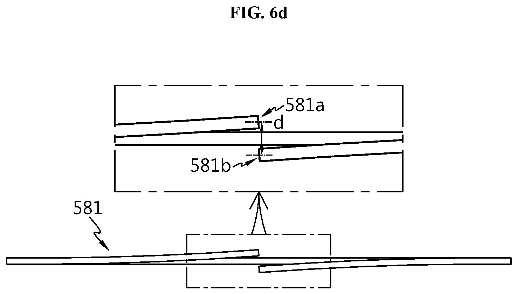

FIGS. 6c and 6d show the elastic biasing element 581 according to an aspect of the present disclosure. The elastic biasing element 581 is not limited in shape, as long as it biases at least a portion of electrode terminal 50 towards the end wall 52. For example, the elastic biasing element 581 may take various forms as will be described below, and one example thereof may be in the form of a spring washer. Hereinafter, the operation of the elastic biasing element 581 of the present disclosure will be described based on the example in which it is in the form of a spring washer.

In an aspect of the present disclosure, the elastic biasing element 581 may be an annular spiral shape with the start point and the end point misaligned in the vertical direction so as to have a height difference d therebetween in an undeformed state. The elastic biasing element 581 may have one end 581a and the other end 581b spaced apart from each other, and may form a spiral or helical shape that runs from one end 581a to the other end 581b at a predetermined angle and inclination. The spring washer may have the form of a type of washer often called a "split lock" washer.

According to an aspect of the present disclosure, the elastic biasing element 581 may be oriented substantially parallel to the outer flange portion 50b, or the outer gasket 54b, or the outer surface 52a of the end wall 52 of the battery housing 51. Here, 'substantially parallel' refers to being in a parallel relationship when observed with the naked eye. Moreover, the outer gasket 54b here may refer to the outer gasket 54b in undeformed state.

According to an aspect of the present disclosure, the elastic biasing element 581 may be positioned in close contact between the terminal gasket 54 and the electrode terminal 50 without any gap therebetween. Due to such close contact, the sealability of the terminal gasket 54 may be increased or maintained at a high level.

Specifically, the elastic biasing element 581 may be mechanically fixed between the terminal gasket 54 and the electrode terminal 50 by the compression of the terminal gasket 54. In other words, while the preform is deformed when pressed by the caulking jig, the elastic biasing element 581 may be mechanically fixed between the terminal gasket 54 and the electrode terminal 50. As a result of such fixing, the elastic biasing element 581 may be compressed in the vertical direction so as to no longer have any substantial height difference between one end 581a and the other end 581b.

According to an aspect of the present disclosure, after the elastic biasing element 581 is positioned between the terminal gasket 54 and the preform, its shape may be changed when the preform is pressed. Specifically, the elastic biasing element 581 may be elastically deformed due to the reduction in the height difference between the ends 581a, 581b.

According to an aspect of the present disclosure, the elastic biasing element 581 may include spring-type washers of various shapes. For example, the elastic biasing element 581 may include any structure that is positioned between the outer flange portion 50b of the electrode terminal 50 and the outer surface 52a of the end wall 52 of the battery housing 51, to bias the electrode terminal 50 relative to the through-hole 53 in which it is positioned in order to force contact between the electrode terminal and the material of the battery housing 51. Such structure may be desirably an annular structure that encircles the body portion 50a of the electrode terminal 50. For example, a variety of commonly used structures may be used, such as a Belleville washer, a wave spring, a split wave spring, a stacked wave spring, a finger disc spring washer or a curved disc spring washer. Alternatively, any annular-shaped disc structure made of a compressible material such as rubber or a porous, foam-like material may be used.

In any or all cases of spring-like biasing structures such as those noted above, upon melting of the terminal gasket 54, the corresponding structure may restore its undeformed state to provide biasing, and in this instance, preferably, may be shaped and sized such that the degree of restoration is at least equal to the thickness of the outer gasket 54b of the terminal gasket 54, and more preferably, the total thickness of the outer gasket 54b plus the inner gasket 54a.

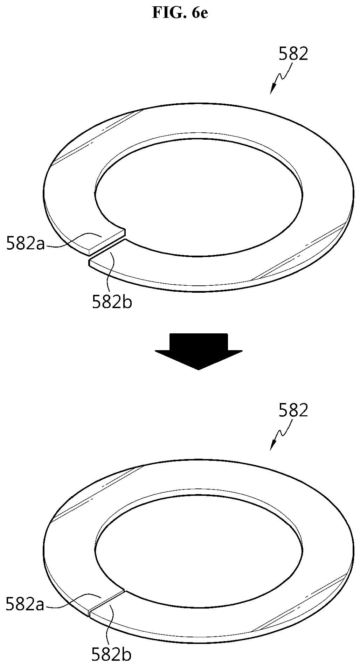

FIG. 6e illustrates the temperature-responsive deformable element 582 according to another aspect of the present disclosure. The temperature-responsive deformable element 582 is not limited in shape as long as it biases at least a portion of the electrode terminal 50 toward the end wall 52 under high temperature conditions. For example, as described below, the temperature-responsive deformable element 582 may take various forms and be made of different materials, but one such form is that of a spring washer.

In another aspect of the present disclosure, in a first shape, the temperature-responsive deformable element 582 may have an annular spiral structure with a height difference d between its start and end points in the vertical direction. The temperature-responsive deformable element 582 may have one end 582a and the other end 582b spaced apart from each other and may form a spiral or helical shape that runs from one end 582a to the other end 582b at a predetermined angle and inclination.

In another aspect of the present disclosure, the temperature-responsive deformable element 582 may exist in a second shape at the normal operating temperature of the battery and may transform into a first shape with an annular spiral structure at temperatures higher than the melting point of the terminal gasket 54.

In another aspect of the present disclosure, in the second shape, the temperature-responsive deformable element 582 may be parallel to the outer surface 52a of the end wall 52 of the battery housing 51. That is, it may take the shape shown on the lower side of FIG. 6e. In this case, the temperature-responsive deformable element 582 may be placed in close contact between the terminal gasket 54 and the electrode terminal 50, without any gap therebetween. Due to such close contact, the sealability of the terminal gasket 54 may be improved or maintained at a high level.

Additionally, the temperature-responsive deformable element 582 may be further mechanically secured between the terminal gasket 54 and the electrode terminal 50 by compression of the terminal gasket 54, similar to the elastic biasing element 581.

In another aspect of the present disclosure, under abnormal operation conditions of the battery such as thermal runaway, the temperature-responsive deformable element 582 may respond to temperature and revert from the second shape to the first shape. As a result, the height difference between the ends 582a and 582b may reappear.

In another aspect of the present disclosure, the temperature-responsive deformable element 582 may be formed of various materials. For example, the temperature-responsive deformable element 582 may be made of shape memory alloys, bimetals including laminated metal materials with different coefficients of thermal expansion, metals or alloys that change shape at high temperatures, ring/semi-ring structures that return to a wavy shape at high temperatures, metals with shape restoration functions, which have a flat shape at room temperature and return to a predefined shape upon temperature rise, or deformable structures having protrusions or irregularities on the surfaces.

In another aspect of the present disclosure, the shape memory alloy may revert to a memorized shape due to a crystal structure change at a specific temperature, for example, temperature during thermal runaway. In another aspect of the present disclosure, the bimetal may include a laminated structure of metal materials that bend/twist in response to temperature. In another aspect of the present disclosure, the structure that returns to a wavy shape at high temperatures may be a thermally expandable and deformable metal structure that bends due to thermal stimulus.

In any case of the above-described temperature-responsive deformable elements 582, in abnormal behavior situations such as thermal runaway, upon melting of the terminal gasket 54, the element may restore its first shape to provide biasing, and in this instance, preferably, may be shaped and sized such that the degree of restoration is at least the thickness of the outer gasket 54b, and more preferably, the total thickness of the outer gasket 54b and the inner gasket 54a.

According to an aspect of the present disclosure, when at least part of the terminal gasket 54 melts, the deformable element 58 may return towards the undeformed spiral configuration having the height difference d between the ends 58a, 58b, thus pushing the electrode terminal 50 outward so as to bring the electrode terminal 50 and the battery housing 51 into contact with each other.

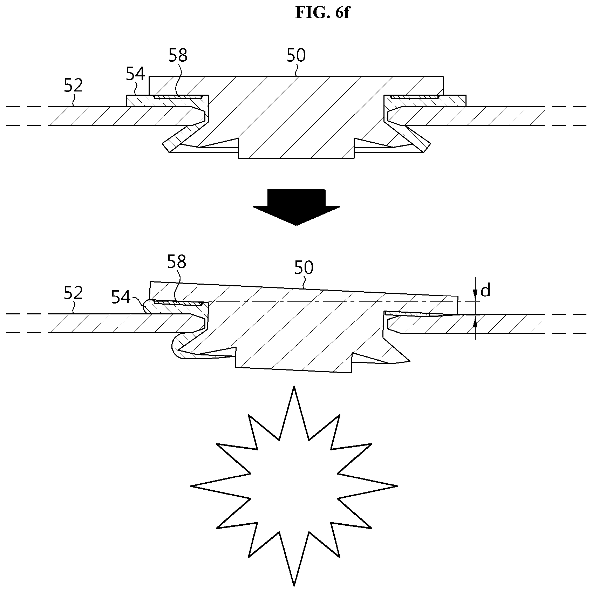

FIG. 6f illustrates the restored state of the deformable element 58 in its undeformed spiral configuration.

In other words, when the deformable element 58 is fixed between the terminal gasket 54 and the electrode terminal 50, as shown on the upper side of FIG. 6f, the deformable element 58 is compressed to such an extent that there is substantially no height difference between one end 58a and the other end 58b of the deformable element 58. Meanwhile, when heat is generated from the battery due to thermal runaway, because the melting point of the terminal gasket 54 is lower than the melting point of the deformable element 58, the terminal gasket 54 may become melted, and in turn, the deformable element 58 may return towards its undeformed state to form the height difference d between one end 58a and the other end 58b of the deformable element 58 again as shown on the lower side of FIG. 6. As a result, the deformable element 58 acts like a crow bar to push the electrode terminal 50 outwards, thus bringing the electrode terminal 50 and the battery housing 51 into contact with each other, so as to cause a short circuit.

When the electrode terminal 50 and the battery housing 51 thus come into contact with each other, the battery housing 51 connected to a first electrode and the electrode terminal 50 connected to a second electrode come into contact with each other, which produces a flow of large current between the battery housing 51 and the electrode terminal 50. As a result, the current collector plate in the battery or the busbar included in a battery pack including the battery may become fused, thus stopping the cycling of the battery, and thereby preventing thermal runaway.

According to another aspect of the disclosure (not shown), the deformable element 58 may be located elsewhere so as to achieve the biasing of the electrode terminal 50 into contact with the end wall 52 of the housing 51 when at least a portion of the terminal gasket 54 melts. For example, the deformable element 58 may be positioned between the outer gasket 54b and the outer surface 52a of the end wall 52 of the battery housing 51 in order to similarly push the electrode terminal 50 outwards to create a short circuit upon melting of the terminal gasket 54. In yet another aspect, the deformable element 58 may be positioned on the other side of the end wall 52 of the battery housing 51. That is, the deformable element 58 may be positioned between the inner surface 52b of the end wall 52 of the battery housing 51 and the inner gasket 54a, or alternatively between the inner gasket 54a and the inner flange portion 50c of the electrode terminal 50. In either of those positions, the melting of the terminal gasket 54 may result in the deformable element 58 returning towards its undeformed state so as to bias the electrode terminal 50 inwards until the outer flange portion 50b contacts the outer surface 52a of the battery housing 51 to induce the short circuit.

According to an aspect of the present disclosure, the deformable element 58 may be made of steel, SUS, or stainless steel.

According to an aspect of the present disclosure, the deformable element 58 may be composed of or may include an electrically conductive material so as to be electrically connected to the conductive component with which it is in contact. Alternatively, the deformable element 58 may be composed of or may include an electrically neutral dielectric material. For example, in the case that the deformable element 58 is electrically conductive, the deformable element 58 positioned as shown in FIGS. 5-6b and 7a-b may be electrically coupled to the electrode terminal 50. In such case, the deformable element 58 is desirably sized and shaped such that height difference d between one end 58a and the other end 58b is at least the thickness of the outer gasket 54b of the terminal gasket 54. In that manner, upon melting of a portion of the terminal gasket 54, such as the outer gasket 54b portion of the terminal gasket 54, the deformable element 58 may elastically restore by at least the thickness of the outer gasket 54b so as to create an electrical contact through the deformable element 58 between the outer flange portion 50b of the electrode terminal 50 and the outer surface 52a of the end wall 52 of the battery housing 51. Even in such case, more preferably, the height difference d may be at least the total thickness of the outer gasket 54b plus the inner gasket 54a. On the other hand, when the deformable element 58 is electrically neutral, the deformable element 58 is desirably sized and shaped such that height difference d is at least the thickness of the outer gasket 54b of the terminal gasket 54, and more preferably, at least the total thickness of the outer gasket 54b plus the inner gasket 54a. In that manner, even if the deformable element 58 itself does not conduct electricity between the outer flange portion 50b of the electrode terminal 50 and the outer surface 52a of the end wall 52 of the battery housing 51, the deformable element 58 may restore to its undeformed state, thereby inducing the electrode terminal 50 to come into direct contact with the end wall 52 of the battery housing 51.

According to another aspect of the present disclosure (not shown), the deformable element 58 may be positioned between the outer gasket 54b and the outer surface 52a of the end wall 52 of the battery housing 51, and in this case, it may be electrically connected to the battery housing 51. In such a case, the deformable element 58 is preferably shaped and sized such that the height difference d between one end 58a and the other end 58b is at least equal to the thickness of the outer gasket 54b of the terminal gasket 54. In this manner, when a portion of the terminal gasket 54, for example, the outer gasket 54b of the terminal gasket 54 melts, the deformable element 58 may elastically restore by an amount equal to or greater than the thickness of the outer gasket 54b, thereby forming electrical contact through the deformable element 58 between the outer flange portion 50b of the electrode terminal 50 and the outer surface 52a of the end wall 52 of the battery housing 51. Additionally, as part of the terminal gasket 54 melts, the electrode terminal 50 and the deformable element 58 may come into contact, potentially causing a short circuit.

Preferably, the fixing structure of the electrode terminal 50, 50' according to the aspects of the present disclosure as described above may be applied to cylindrical batteries with larger form factors than 2170.

Recently, as cylindrical batteries have been applied to electric vehicles, the form factors of cylindrical batteries have been increasing to more than 1865 or 2170. The increase in form factor leads to increased energy density, increased safety against thermal runaway, and improved cooling efficiency.

In addition, as described below, a cylindrical battery having the fixing structure of the electrode terminal 50, 50' may allow for more efficient electrical wiring by positioning the electrical terminal of one polarity adjacent to the electrical terminal of the opposite polarity (e.g., defined by the adjacent end wall 52 of the battery housing 51. In addition, because of the large cross-sectional area and low resistance, the electrode terminal 50, 50' is well adapted for fast charging.

Preferably, the cylindrical battery having the electrode terminal 50, 50' structure of the present disclosure may be, for example, a cylindrical battery having a form factor ratio (defined as a value obtained by dividing the diameter Φ of the cylindrical battery by the height H, i.e., a height-to-diameter ratio) of approximately more than 0.4.

Here, the form factor refers to a value representing the diameter and height of the cylindrical battery. The form factor of the cylindrical battery according to an aspect of the present disclosure may be, for example, 4611, 4875, 48110, 4880, and 4680. In the numerical value representing the form factor, the first two numbers represent the diameter of the battery, and the remaining number represents the height of the battery.

The battery according to an aspect of the present disclosure may be a cylindrical battery having a diameter of approximately 46 mm, a height of approximately 110 mm, and a form factor ratio of 0.418.

The battery according to another aspect may be a cylindrical battery having a diameter of approximately 48 mm, a height of approximately 75 mm, and a form factor ratio of 0.640.

The battery according to another aspect may be a cylindrical battery having a diameter of approximately 48 mm, a height of approximately 110 mm, and a form factor ratio of 0.436.

The battery according to another aspect may be a cylindrical battery having a diameter of approximately 48 mm, a height of approximately 80 mm, and a form factor ratio of 0.600.

The battery according to another aspect may be a cylindrical battery having a diameter of approximately 46 mm, a height of approximately 80 mm, and a form factor ratio of 0.575.

Batteries having a form factor ratio of approximately 0.4 or less have been used. That is, for example, 1865 and 2170 batteries have been used. In the case of 1865 batteries, the diameter is approximately 18 mm, the height is approximately 65 mm, and the form factor ratio is 0.277. In the case of 2170 batteries, the diameter is approximately 21 mm, the height is approximately 70 mm, and the form factor ratio is 0.300.

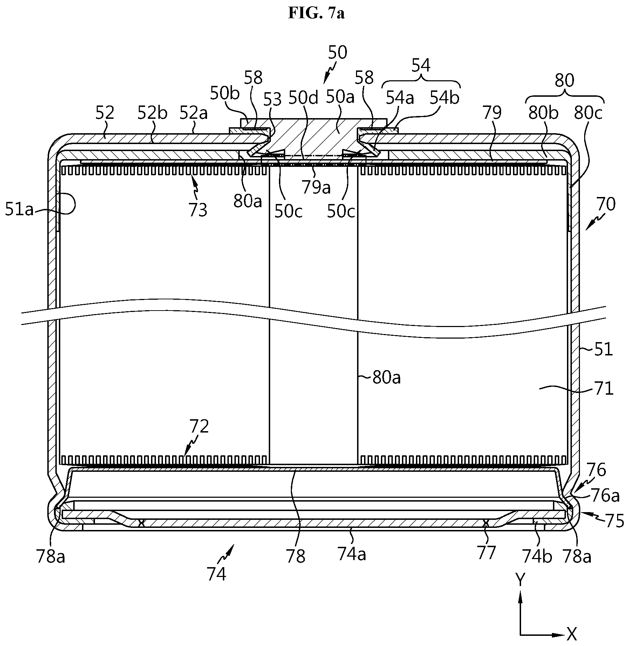

FIG. 7a is a cross-sectional view of the cylindrical battery 70 according to an aspect of the present disclosure, taken along the longitudinal direction (Y).

Referring to FIG. 7a, the cylindrical battery 70 according to an aspect includes a jellyroll-type electrode assembly 71 in which a sheet-shaped first electrode and a sheet-shaped second electrode are wound with a separator interposed therebetween, and an uncoated portion 72 of the first electrode as a first part of the first electrode is exposed on the bottom, and an uncoated portion 73 of the second electrode as a second part of the second electrode is exposed on the top.

Note that the "first part" and the "second part" of the electrodes may be other parts of the electrodes than the uncoated portions. For example, such parts may include a metal tab electrically coupled to the uncoated portion of the electrode. In addition, the electrode assembly 71 may have other shapes than the jellyroll shape. For example, beyond cylindrical shapes, the battery may have a prismatic shape or any other shape.

In an aspect of the present disclosure, the first electrode may be negative and the second electrode may be positive, or vice versa.

Methods for winding the electrode assembly 71 may be substantially the same as any of the methods for winding electrode assemblies used in the manufacture of conventional tab-less cylindrical batteries like those described with reference to FIG. 2.

In depicting the electrode assembly 71, only the uncoated portions 72, 73 extended and exposed to the outside of the separator are shown in detail, and the illustration of the winding structure of the first electrode, the second electrode and the separator are omitted herein.

The cylindrical battery 70 includes a cylindrical battery housing 51 accommodating the electrode assembly 71, and the cylindrical battery housing 51 may be electrically connected to the uncoated portion 72 of the first electrode.

Preferably, one side (e.g., the upper side) of the battery housing 51 is open. In addition, the end wall 52 of the battery housing 51 has a structure in which the electrode terminal 50 is riveted to the through-hole 53 through deformation (e.g., caulking).

The electrode terminal 50 may include the body portion 50a inserted into the through-hole 53, the outer flange portion 50b extending along the outer surface 52a from the first side periphery of the body portion 50a exposed through the outer surface 52a of the end wall 52 of the battery housing 51, the inner flange portion 50c extending toward the inner surface 52b from the second side periphery of the body portion 50a exposed through the inner surface 52b of the end wall 52 of the battery housing 51, and optionally, the flat portion 50d disposed on the inner side of the inner flange portion 50c and surrounded by the inner flange portion 50c.

The electrode terminal 50 may be replaced with the electrode terminal 50' structure shown in FIG. 6b.

The cylindrical battery 70 may also include the terminal gasket 54 positioned between the electrode terminal 50 and the through-hole 53.

Specifically, the cylindrical battery 70 may also include a sealing body 74 that seals the open end region of the battery housing 51 to insulate from the battery housing 51. Preferably, the sealing body 74 may include a cap 74a that is non-polar and has a plate shape, and a sealing gasket 74b positioned between the edge of the cap 74a and the open end region of the battery housing 51.

The cap 74a may be made of a conductive metal such as aluminum, steel, or nickel. In addition, the sealing gasket 74b may be made of polypropylene, polybutylene terephthalate, or polyfluoroethylene, preferably having insulating properties and elasticity. However, the present disclosure is not limited by the material of the cap 74a and the sealing gasket 74b.

The cap 74a may include a vent notch 77 that is configured to rupture when the internal pressure of the battery housing 51 exceeds a threshold magnitude. The vent notch 77 may be formed on both sides of the cap 74a. The vent notch 77 may form a continuous or discontinuous circular pattern, a linear pattern, or any other pattern on the surface of the cap 74a. The depth or width of the vent notch 77 may be set to cause the vent notch 77 to rupture when the internal pressure of the battery housing 51 is in a range from 15 kgf/cm² to 35 kgf/cm^{2.}

The battery housing 51 may include a crimping portion 75 extending from the battery housing 51 and bent radially inward so as to wrap around the edge of the cap 74a together with the sealing gasket 74b to fix the sealing body 74.

Preferably, the lower surface of the cap 74a may be located at a higher position (spaced further from the electrode assembly 71) than the lower end of the crimping portion 75. Accordingly, a vent space may be formed below the cap 74a, and when the vent notch 77 is ruptured, gas may be released to atmosphere.

The battery housing 51 may also include a beading portion 76 beaded inward from the battery housing 51 in the area adjacent to the open end region. The beading portion 76 supports the edge of the sealing body 74, in particular, an outer peripheral surface of the sealing gasket 74b when the sealing body 74 is fixed by the crimping portion 75.

The cylindrical battery 70 may further include a first current collector 78 welded to the uncoated portion 72 of the first electrode. The first current collector 78 is made of a conductive metal such as aluminum, steel, or nickel. Preferably, the first current collector 78 may be fixed by the crimping portion 75 such that at least part 78a of an edge that does not contact the uncoated portion 72 of the first electrode is positioned between the beading portion 76 and the sealing gasket 74b. Optionally, at least part 78a of the edge of the first current collector 78 may be fixed to an inner peripheral surface 76a of the beading portion 76 adjacent to the crimping portion 75 by welding.

The cylindrical battery 70 may also include a second current collector 79 welded to the uncoated portion 73 of the second electrode. Preferably, at least part of the second current collector 79, for example, a central part 79a may be welded to the flat portion 50d of the electrode terminal 50.

Preferably, when welding the second current collector 79, a welding tool may be inserted through a welding hole 80a in the core of the electrode assembly 71 and reach a welding point of the second current collector 79. That is, such welding may be performed before the sealing body 74 is secured to the open end of the battery housing 51, by inserting the welding tool into the welding hole 80a through the open end of the battery housing 51.

When the second current collector 79 is welded to the flat portion 50d of the electrode terminal 50, because the electrode terminal 50 supports the welding area of the second current collector 79, strong pressure may be applied to the welding area to improve the welding quality. In addition, because the flat portion 50d of the electrode terminal 50 has a large area, the welding area may be also wide. Accordingly, the internal resistance of the cylindrical battery 70 may be reduced by reducing the contact resistance of the welding area. The contact welding structure of the riveted electrode terminal 50 and the second current collector 79 is very useful for fast charging using high c-rate current. This is because the current density per unit area in cross section in the flow direction of current may be reduced, resulting in smaller amount of heat generated from the current path.

To weld the flat portion 50d of the electrode terminal 50 to the second current collector 79, any one of laser welding, ultrasonic welding, spot welding, and resistance welding may be used.

The cylindrical battery 70 may further include an insulator 80. The insulator 80 may be positioned between the second current collector 79 and the inner surface 52b of the end wall 52 of the battery housing 51, and between an inner peripheral surface 51a of the side wall of the battery housing 51 and the electrode assembly 71.

Preferably, the insulator 80 may include the welding hole 80a through which the flat portion 50d of the electrode terminal 50 is exposed to the second current collector 79. In addition, the welding hole 80a may expose the inner flange portion 50c and the inner gasket 54a together with the flat portion 50d of the electrode terminal.

Preferably, the insulator 80 can cover at least the surface of the second current collector 79 and the axial end of the electrode assembly 71 closest to the end wall 52 of the battery housing 51. Thus, the insulator 80 desirably prevents contact between the battery housing 51 and either the second current collector 79 or the uncoated portion 73 of the second electrode, which both have a different polarity than the battery housing 51.

Preferably, the insulator 80 is made of an insulating resin and may include an upper plate 80b and a side sleeve 80c. In an example, the upper plate 80b and the side sleeve 80c may be integrally formed into a monolithic component by injection molding. Alternatively, the side sleeve 80c may be replaced with an insulating tape. The insulating tape may cover the outer edge of the second current collector 79 together with the uncoated portion 73 of the second electrode exposed through the outer peripheral surface of the electrode assembly 71.

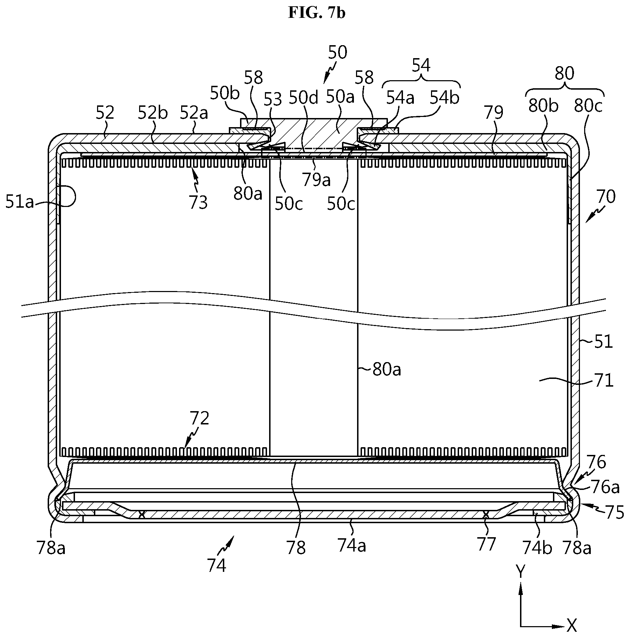

Preferably, the insulator 80 and the inner surface 52b of the end wall 52 of the battery housing 51 may be in close contact with each other as shown in FIG. 7b. Here, 'close contact' refers to no space (gap) visible with the naked eye. To reduce any space (gap) between the insulator 80 and the inner surface 52b, a distance from the inner surface 52b of the end wall 52 of the battery housing 51 to the flat portion 50d of the electrode terminal 50 may be set to be equal to or slightly smaller than a thickness of the insulator 80.

Preferably, the uncoated portion 72, 73 of the first electrode and/or the second electrode may be bent in the radial direction of the electrode assembly 71, for example, from the outer circumference towards the core, so as to form bent surfaces along the top and bottom of the electrode assembly 71. In addition, the first current collector 78 may be welded to the bent surface formed by bending the uncoated portion 72 of the first electrode, and the second current collector 79 may be welded to the bent surface formed by bending the uncoated portion 73 of the second electrode.

To mitigate the stress generated when bending the uncoated portion 72, 73, the first electrode and/or the second electrode may have an improved structure different from the conventional electrode shown in FIG. 1, as will now be discussed.

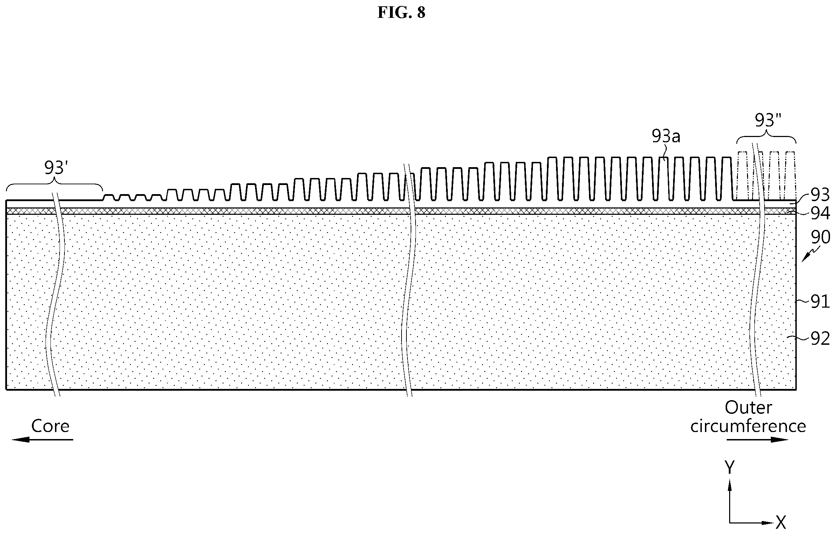

FIG. 8 is a plan view illustrating the unwound structure of the electrode 90 according to an exemplary aspect of the present disclosure.

Referring to FIG. 8, the electrode 90 includes a sheet-shaped current collector 91 of a conductive foil having an active material layer 92 coated on at least one surface of the current collector 91. Accordingly, an uncoated portion 93 having no coating of active material is defined along one long side of the current collector 91.

Preferably, the uncoated portion 93 may include a plurality of notched segments 93a. The plurality of segments 93a may form a plurality of groups, and the segments 93a in each group may have the same height (length in the axial direction Y) and/or width (length in the winding direction X) and/or pitch (angle of the sides relative to the X direction). The number of segments 93a in each group may be smaller or larger than the number of segments shown in FIG. 8. Each segment 93a may have a geometric shape defined by a combination of at least one straight line and/or at least one curved line. Preferably, each segment 93a may have a trapezoidal shape, but the shapes may be modified in any way, for example, square, rectangular, parallelogram, semicircular, or semielliptical or semioval shapes.

Preferably, the height of the segments 93a may increase stepwise along a direction parallel to the winding direction of the electrode assembly, for example, from the core towards the outer circumference. In addition, a core-side uncoated portion 93' adjacent to the core may not include any segment 93a, and the height of the core-side uncoated portion 93' may be smaller than that of the other uncoated portions. In addition, an outer circumference-side uncoated portion 93" adjacent to the outer circumference may not include any segments 93a, and the height of the outer circumference-side uncoated portion 93" may be smaller than that of the other uncoated portions.

Optionally, the electrode 90 may include an insulating coating layer 94 that covers the boundary between the active material layer 92 and the uncoated portion 93. The insulating coating layer 94 includes polymer resin having electrically insulating properties and may optionally further include inorganic fillers. The insulating coating layer 94 plays a role in preventing contact between an edge portion of the active material layer 92 and an active material layer of an opposite polarity electrode located on the opposite side of the intervening separator, which structurally supports the bent segment 93a along the axial direction (Y). To this end, when the electrode 90 is wound into the electrode assembly, it is preferred that at least part of the insulating coating layer 94 is exposed beyond the adjacent edge of the separator.

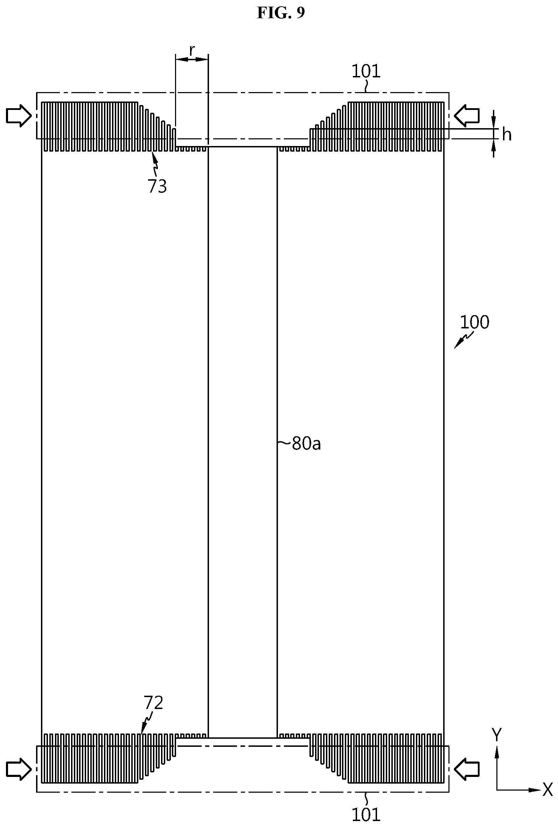

FIG. 9 is a cross-sectional view of the electrode assembly 100 including the first electrode and the second electrode having the uncoated portion segment structure of the electrode 90 according to an aspect of the present disclosure, taken along the longitudinal direction (Y).

Referring to FIG. 9, the electrode assembly 100 may be manufactured by the winding method discussed above in connection with FIG. 2. For convenience of description, the protruding structure of the uncoated portions 72, 73 extending out beyond the edge of the separator is shown in detail, and the illustration of the winding structure of the first electrode, the second electrode and the separator is omitted. Note that the uncoated portion 72 protruding downward extends from the first electrode, and the uncoated portion 73 protruding upward extends from the second electrode.

The pattern in which the height of the uncoated portion 72, 73 changes is schematically shown. That is, the height of the uncoated portion 72, 73 may change irregularly depending on where the cross section is taken. For example, when the side part of the trapezoidal segment 93a is taken, the height of the uncoated portion in cross section will be lower than the full height of the segments 93a. Therefore, it should be understood that the height of the uncoated portion 72, 73 shown in the drawing showing the cross section of the electrode assembly 100 corresponds to the average height of uncoated portions included in each winding turn.

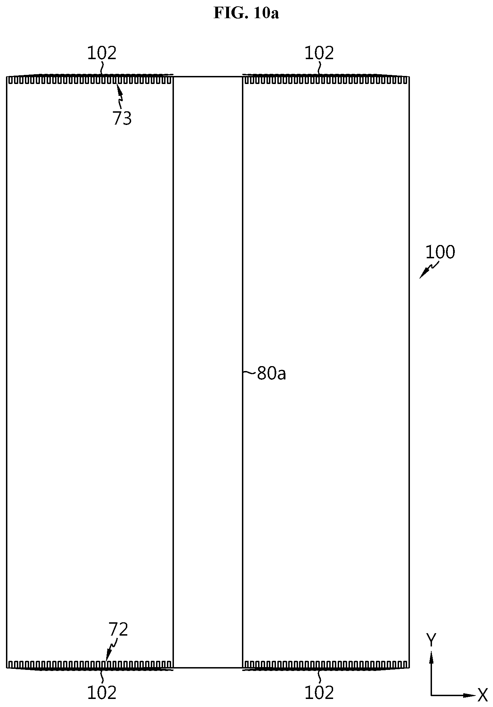

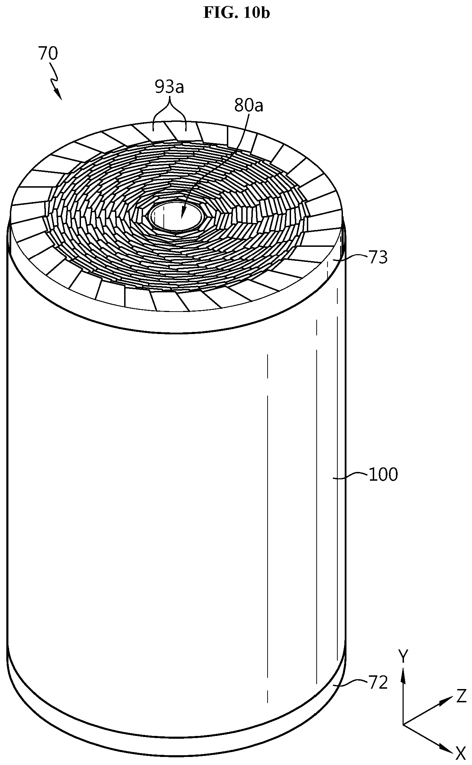

The uncoated portion 72, 73 may be bent along the radial direction of the electrode assembly 100, for example, from the outer circumference to the core, as shown in FIGS. 10a and 10b. In FIG. 9, a bending portion 101 is indicated by the dotted box. When the uncoated portion 72, 73 is bent, the adjacent segments in the radial direction overlap in multiple layers, to form the bent surface 102 on top and bottom of the electrode assembly 100. In this instance, the core-side uncoated portion (93' in FIG. 8) is not bent because the height is low, and the height (h) of the segment bent at the innermost side is equal to or smaller than the radial length (r) of the winding area formed by the core-side uncoated portion 93' having no segment structure. Thus, because the welding hole 80a does not become closed, there will not be an added difficulty in performing the electrolyte injection process, and the electrolyte injection efficiency will be high. In addition, the welding of the electrode terminal 50 and the second current collector 79 may be easily performed by inserting the welding tool through the welding hole 80a.

In the cylindrical battery 70 according to an aspect of the present disclosure, the cap 74a of the sealing body 74 is non-polar. Instead, the first current collector 78 is connected to the side wall of the battery housing 51, such that the outer surface 52a of the end wall 52 of the battery housing 51 has an opposite polarity to the electrode terminal 50. Therefore, when connecting a plurality of batteries in series and/or in parallel, wiring connections such as busbar connections may be performed at the top of the cylindrical battery 70, using the outer surface 52a of the end wall 52 of the battery housing 51 and the electrode terminal 50. As a result, it may be possible to increase the number of batteries that may be mounted in a given space, thereby improving energy density and performing the electrical wiring operation with ease.

In the present disclosure, the positive electrode active material coated on the positive electrode and the negative electrode active material coated on the negative electrode may include any active material commonly used in the art without limitation.

In an example, the positive electrode active material may include an alkali metal compound represented by the general chemical formula A[AₓM_{y}]O_{2+z} (where A includes at least one of Li, Na, or K; M includes at least one selected from Ni, Co, Mn, Ca, Mg, Al, Ti, Si, Fe, Mo, V, Zr, Zn, Cu, Al, Mo, Sc, Zr, Ru, or Cr; x ≥ 0, 1 ≤ x+y ≤2, -0.1 ≤ z ≤ 2; and the stoichiometric coefficients of the components included in x, y, z, and M are selected to keep the compound electrically neutral).

In another example, the positive electrode active material may include an alkali metal compound xLiM¹O₂-(1-x)Li₂M²O₃ (where M¹ includes at least one element having the average oxidation state of 3; M² includes at least one element having the average oxidation state of 4; 0≤x≤1) as disclosed in U.S. Patent No. 6,677,082 and U.S. Patent No. 6,680,143, the entire disclosures of which are incorporated herein by reference.

In still another example, the positive electrode active material may include lithium metal phosphate represented by the general chemical formula LiₐM¹ₓFe₁₋ₓM²_{y}P_{1-y}M³_{z}O_{4-z} (where M¹ includes at least one selected from Ti, Si, Mn, Co, Fe, V, Cr, Mo, Ni, Nd, Al, Mg, or Al; M² includes at least one selected from Ti, Si, Mn, Co, Fe, V, Cr, Mo, Ni, Nd, Al, Mg, Al, As, Sb, Si, Ge, V, or S; M³ includes a halogen group element optionally including F; 0 < a ≤ 2, 0 ≤ x ≤ 1, 0 ≤ y < 1, 0 ≤ z < 1; and the stoichiometric coefficients of the components included in a, x, y, z, M¹, M², and M³ are selected to keep the compound electrically neutral), or Li₃M₂(PO₄)₃ [where M includes at least one selected from Ti, Si, Mn, Fe, Co, V, Cr, Mo, Ni, Al, Mg, or Al].

Preferably, the positive electrode active material may include primary particles and/or secondary particles or agglomerates of the primary particles.

In an example, the negative electrode active material may include a carbon material, a lithium metal or a lithium metal compound, silicon or a silicon compound, or tin or a tin compound. The negative electrode active material may also include metal oxide having the potential of less than 2V, such as TiO₂ or SnO₂. The carbon material may include low-crystalline carbon and high-crystalline carbon.

The separator may include a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, and they may be used singly or in stack. As another example, the separator may include a commonly used porous nonwoven fabric, for example, a nonwoven fabric made of high-melting-point glass fibers or polyethylene terephthalate fibers.

The separator may include a coating layer of inorganic particles on at least one surface. The separator itself may be a coating layer of inorganic particles. The particles that constitute the coating layer may have a structure in which they are held together by a binder with interstitial volume present between adjacent particles.

The inorganic particles may include an inorganic material having the dielectric constant of 5 or more. As a non-limiting example, the inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO, and Y₂O₃.

The electrolyte may be a salt having a structure of A⁺B⁻, where A+ includes an alkali metal cation such as Li⁺, Na⁺, K⁺, or a combination thereof, and B⁻ includes at least one anion selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The electrolyte may be used by dissolving it in an organic solvent. The organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma butyrolactone, or a mixture thereof.

The cylindrical battery 70 according to the above-described aspect may be used to manufacture a battery pack.

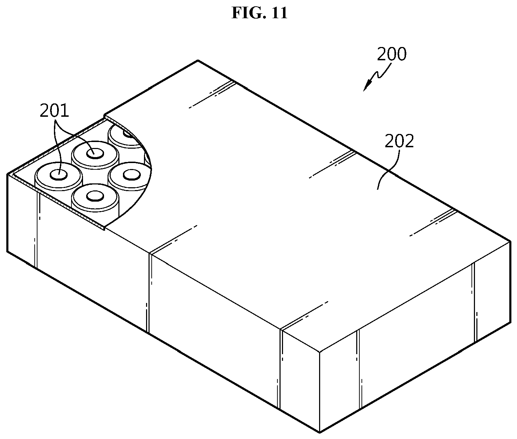

FIG. 11 is a diagram schematically showing the configuration of a battery pack according to an aspect of the present disclosure.

Referring to FIG. 11, the battery pack 200 according to an aspect of the present disclosure includes an assembly of electrically connected cylindrical batteries 201 and a pack housing 202 accommodating it. The cylindrical battery 201 may be the battery according to the above-described aspect. In the drawing, for the convenience of illustration, some components such as a busbar for electrical connection of the cylindrical batteries 201, a cooling unit, and an external terminal are omitted.

The battery pack 200 may be mounted on or in a vehicle. The vehicle may include, for example, an electric vehicle, a hybrid electric vehicle, or a plug-in hybrid vehicle. The vehicle may include a four-wheel vehicle or a two-wheel vehicle.

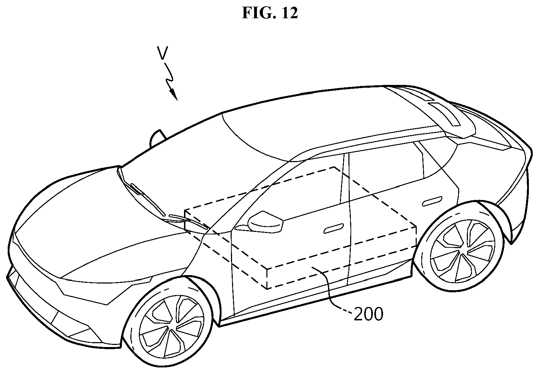

FIG. 12 is a diagram illustrating the vehicle including the battery pack 200 of FIG. 11.

Referring to FIG. 12, the vehicle V according to an aspect of the present disclosure includes the battery pack 200 according to an aspect of the present disclosure. The vehicle V runs on the power supplied from the battery pack 200 according to an aspect of the present disclosure.

Although the present disclosure has been hereinabove described with regard to a limited number of aspects and drawings, the present disclosure is not limited thereto, and a variety of modifications and variations may be made thereto by those skilled in the art within the technical aspect of the present disclosure and the appended claims and its equivalent scope.

## Claims

1. A subassembly of a battery, comprising:
a battery housing defining an interior space configured to receive at least a portion of an electrode assembly therein, the battery housing extending along an axial direction, the battery housing having an open end region at a first side along the axial direction and a closed end region at an opposing second side along the axial direction, the closed end region defined by an end wall having a through-hole extending therethrough;
a terminal gasket positioned within the through-hole;
an electrode terminal positioned within the terminal gasket so as to be spaced from the end wall of the battery housing by the terminal gasket, the electrode terminal being exposed to an exterior of the battery housing; and
a deformable element positioned between the end wall and the electrode terminal so as to bias at least a portion of the electrode terminal towards the end wall.

2. The subassembly according to claim 1,
wherein the electrode terminal includes:
a body portion positioned within the through-hole;
an outer flange portion extending radially outwardly from an exterior end of the body portion; and
an inner flange portion extending radially outwardly from an interior end of the body portion.

3. The subassembly according to claim 2, wherein the body portion, the outer flange portion, and the inner flange portion are integrally formed as a monolithic structure of the electrode terminal.

4. The subassembly according to claim 2,
wherein an inwardly oriented side of the inner flange portion defines a flat welding surface.

5. The subassembly according to claim 2,
wherein the terminal gasket includes:
an outer gasket positioned between the outer flange portion and an outer surface of the end wall of the battery housing;
an inner gasket positioned between the inner flange portion and an inner surface of the end wall of the battery housing; and
an intermediate gasket extending between the body portion and the end wall of the battery housing so as to connect the outer gasket to the inner gasket.

6. The subassembly according to claim 5,
wherein the deformable element is positioned between the outer flange portion and the outer gasket.

7. The subassembly according to claim 5,
wherein the deformable element is positioned between the outer surface of the end wall of the battery housing and the outer gasket.

8. The subassembly according to claim 1,
wherein the deformable element comprises an elastic biasing element or a temperature-responsive deformable element.

9. The subassembly according to claim 1,
wherein the elastic biasing element includes a spring washer.

10. The subassembly according to claim 1,
wherein the battery housing is cylindrical in shape.

11. The subassembly according to claim 1,
wherein the deformable element includes an elastic biasing element, and
wherein the elastic biasing element is in a compressed configuration such that it is biased to expand towards an undeformed configuration by a predetermined displacement amount along the axial direction.

12. The subassembly according to claim 1,
wherein the elastic biasing element is in a configuration such that it is biased to expand towards an undeformed configuration by a predetermined displacement amount along the axial direction.

13. The subassembly according to claim 11,
wherein the displacement amount is greater than or equal to a thickness of the terminal gasket.

14. The subassembly according to claim 13,
wherein the displacement amount is greater than or equal to a total thickness of all portions of the terminal gasket along the axial direction.

15. The subassembly according to claim 1,
wherein the deformable element is electrically conductive.

16. The subassembly according to claim 1,
wherein a melting point of the deformable element is higher than a melting point of the terminal gasket.

17. A battery comprising:
the subassembly according to claim 1; and
an electrode assembly received within the interior space of the battery housing, the electrode assembly including a first electrode and a second electrode and a separator interposed between the first electrode and the second electrode, the first electrode, the second electrode and the separator being wound together, wherein the first electrode is electrically connected to the battery housing and the second electrode is electrically connected to the electrode terminal.

18. The battery according to claim 17, further comprising:
a sealing body positioned over and sealing the open end region of the battery housing.

19. The battery according to claim 18,
wherein the battery housing further includes a crimping portion extending radially inwardly so as to be disposed around an edge of the sealing body.

20. A battery pack comprising the battery according to claim 17.

21. A vehicle comprising the battery pack according to claim 20.
